# EUROPEAN PATENT APPLICATION

(11) **EP 4 258 291 A1**
(43) Date of publication of application: **11.10.2023**
(21) Application number: 21901135.0
(22) Date of filing: 29.11.2021
(51) Int. Cl.: H01B 1/12, H01B 1/24, C08L 75/04, C01B 32/158, B82Y 30/00

(54) **METHOD FOR PRODUCING AN ELECTRICALLY CONDUCTIVE POLYURETHANE COMPOSITE MATERIAL, AND SAID MATERIAL**

(30) Priority: 04.12.2020 RU 2020139857
(71) Applicant: MCD Technologies S.a.r.l, 3364 Leudelange (LU)
(72) Inventor: PREDTECHENSKIY, Mikhail Rudolfovich, Novosibirsk, 630008 (RU); CHEBOCHAKOV, Dmitry Semenovich, respublika Khakasiya, 655650 (RU); KANAGATOV, Beket, Novosibirsk, 630055 (RU); FEDOROV, Nikita Aleksandrovich, Novosibirskaya obl. 632552 (RU)
(74) Representative: Dennemeyer & Associates S.A.
(86) International application number: PCT/RU2021/050400
(87) International publication number: WO 2022/119476

(57) **Abstract**

The present invention relates to an electrically conductive polyurethane composite material and a method for producing same and can be used in the manufacture of articles and coatings from polyurethane composite materials having a desired electrical conductivity. The present method for producing an electrically conductive polyurethane composite material by reacting organic polyisocyanates (A) with one or more compounds (B) containing NCO-reactive groups includes a step of mixing a concentrate of carbon nanotubes with compounds (B) or with polyisocyanates (A) or with a mixture containing organic polyisocyanates (A) and compounds (B) at an input energy of less than 0.5 kW·h per 1 kg of mixture and a carbon nanotube content of less than 0.1 mass. % relative to the sum of the masses of (A) and (B).

## Description

### Background

The invention is directed to antistatic and conductive polyurethane composite materials and to a method of producing thereof, and it can be used in the production of articles and coatings made of polyurethane composite materials. The invention can be used to produce polyurethane composite materials having a desired conductivity.

### Prior Art

Polyurethane (PU) is a segmented polymer consisting of soft and rigid segments, and it is one of six most important synthetic materials. In addition to high elastomeric properties, polyurethanes also have a good abrasion resistance, chemical resistance, and high tensile strength. PU is an excellent insulator since its volume resistivity is up to 10¹³ Ohm·cm, which is an advantage in certain applications. However, in many applications, insulating properties of polyurethane result in accumulation of static electricity on the part surface, which can potentially lead to an electrostatic discharge (spark). Accumulation of static electricity must be prevented when materials are used near combustible materials or in explosive environments. It can also lead to malfunction or damage to electronic devices. A number of international standards relate to control of conductivity of polyurethane articles (International standards ISO 9563:2015, ASTM D991, EN 61340-5-1, EN ISO 18080, ANSI/ESD STM2.1, Directives 1994/9/EC and ATEX 95, GOST 12.4.124, ASTM F150, etc.). According to Russian standard GOST 12.4.124, antistatic substances should provide a reduction in the volume and surface resistivity of a material to 10⁹ Ohm·cm and 10⁹ Ohm, respectively. Antistatic substances and materials are also called "ESD(-safe)."

Methods are known to impart conductivity to polyurethane materials sufficient to dissipate static electricity charge by introducing conductive organic additives, or metal salts, or metal oxides, or metal hydroxides having ionic conductivity (e.g., proton conductivity). However, ionic conductivity requires the maintenance of certain conditions, e.g., humidity. Such antistatic additives cannot provide the polymer with a stable antistatic capacity, while low relative humidity has a strong effect on surface resistance of the polymer, which limits their broad application.

Other methods to impart conductivity to polyurethane materials sufficient to prevent accumulation of static electricity involve addition of conductive fillers having electronic conductivity: soot (carbon black) or metal powder. A drawback of these methods is that a large amount of conductive fillers (more than 10% v/v) is required to create a connected conductive net in the material. Introduction of such a large amount of filler substantially alters rheological properties of the components before their chemical interaction to form polyurethane, which complicates production of articles made of polyurethane. Introduction of such a large amount of filler also alters physical and mechanical properties of the material, making it more rigid, brittle, reducing its impact strength and other important properties.

Carbon nanotubes (CNT) are known to be used as the conductive additive to obtain polyurethane-based composite materials with sufficient conductivity to dissipate electrostatic charge. The advantage of such composite materials is that target polyurethane conductivity levels can be achieved with the amount of carbon nanotubes many times lower compared to other conductive fillers, such as carbon black, metals, conductive metal oxides. Patent US 8945434 B2 describes an antistatic or conductive thermosetting polyurethane produced by reacting (A) an organic polyisocyanate, (B) a compound comprising NCOreactive groups, and (C) optionally a catalyst and auxiliary compounds or a mixture thereof, characterized in that polyurethane comprises carbon nanotubes in the amount of 0.1 to 15 wt.% of the total mass of polyurethane, and in that 30 to 90 wt.% of carbon nanotubes have a particle size less than 40 µm, and 10 to 70 wt.% of carbon nanotubes have a particle size 40 to 1000 µm, and more than 90% of carbon nanotubes having a particle size 40 to 1000 µm have a diameter 100 to 200 µm.

Patent US 8945434 B2 also describes a method of producing an antistatic or conductive thermosetting polyurethane comprising the steps of (II) mixing carbon nanotubes with (A), with (B), or with a mixture thereof at the power density 10² kW/m³ to 10¹⁴ kW/m³ using a rotor-stator system, wherein the content of carbon nanotubes is 0.1 to 15 wt.% of the total mass of (A) and (B); (III) reacting (A) with (B) and optionally with a catalyst and auxiliary compounds to form a composition; (IV) introducing the composition into a mold or applying the composition to a substrate; (V) curing the composition to form a part made of antistatic or conductive polyurethane, wherein the content of carbon nanotubes is 0.1 to 15 wt.% of the total mass of polyurethane, and 30 to 90 wt.% of carbon nanotubes have a particle size less than 40 µm, and 10 to 70 wt.% of carbon nanotubes have a particle size 40 to 1000 µm, and more than 90 wt.% of carbon nanotubes having a particle size 40 to 1000 µm have a diameter 100 to 200 µm.

A critical factor for achieve the technical result in the cited publication is a high input power density of 100 kW/m³ to 100 TW/m³, preferably more than 10 MW/m³ and up to 10 TW/m³. Locally, in the maximum shear stress area, the power density is even higher. Such a high input power is a significant disadvantage of the method, as the suggested power density over 10 MW/m³ can result in a rapid degradation of the components of the polyurethane material, let alone the power densities of GW/m³ and TW/m³. The degradation of the components of the polyurethane material can negatively affect physical and mechanical properties of the material, such as tensile modulus, tensile strength, or tear strength. A further drawback of the method is the need for introduction of a high concentration of carbon nanotubes, which results in an increased viscosity of the system (it is known that viscosity may increase by more than 20 times for the CNT content of more than 0.1 wt.%) and an increased processing difficulty. Introduction of more than 0.1 wt.% CNT prevents from obtaining colored antistatic materials, which is also a drawback of the provided method.

It follows from the above that there is a technical problem of producing conductive or antistatic polyurethane composite materials having a volume resistivity of less than 10⁹ Ohm·cm without degradation of the components of the polyurethane material during its mechanical processing. Patent US 8945434 B2 does not solve this problem, since, with the recommended power density of 10 MW/m³ to 10 TW/m³, degradation of the components of the material is probable and even inevitable. Still the method of patent US 8945434 B2 is adopted as the prototype.

### Summary of the Invention

The present invention provides a method of producing a conductive polyurethane composite material by reacting organic polyisocyanates (A) with one or several compounds comprising NCO-reactive groups (B), where the method includes mixing carbon nanotube concentrate with compounds (B) or with polyisocyanates (A), or with a mixture comprising organic polyisocyanates (A) and compounds (B), at the input energy less than 0.5 kW·h per 1 kg mixture, with the content of carbon nanotubes less than 0.1 wt.% of the total mass of (A) and (B).

The term "conductive material" refers to a material with the volume resistivity of 10 to 10⁹ Ohm·cm, including antistatic material, i.e., the material with sufficient conductivity to dissipate the static electricity charge, with the volume resistivity of 10⁵ to 10⁹ Ohm·cm.

The technical result includes producing conductive polyurethane composite materials having the volume resistivity of less than 10⁹ Ohm·cm without degradation of the components of the polyurethane material during its mechanical processing. In certain embodiments of the method, the technical result is to produce a colored conductive polyurethane composite material, which is an additional advantage.

The technical result is achieved in the provided method by introducing carbon nanotubes into the polyurethane material by introducing carbon nanotube concentrate at the CNT content less than 0.1 wt.% of the total mass of polyisocyanates (A) and compounds (B) rather than carbon nanotubes directly, with the rate of energy input into the mixture of carbon nanotubes with the components of the polyurethane material being less than 0.5 kW·h per 1 kg mixture.

Carbon nanotubes can be multi-walled carbon nanotubes, few-walled carbon nanotubes, double-walled carbon nanotubes, or single-walled carbon nanotubes, or a mixture thereof. Carbon nanotubes can be aggregated to produce joint agglomerates of various geometry, such as coil-like, or bundles of carbon nanotubes held together by van-der-Waals forces (π-π interaction). Preferably, the carbon nanotube concentrate comprises single-walled or double-walled carbon nanotubes. Preferably, single-walled or double-walled carbon nanotubes in the concentrate are of high quality, i.e., contain few structural defects, which is demonstrated by a high ratio of intensities of G and D bands in the Raman spectrum for the light wavelength 532 nm. Preferably, the ratio in the Raman spectrum for the carbon nanotube concentrate is higher than 10, more preferably the ratio is higher than 30, and most preferably the ratio is 50. However, the technical result can also be achieved in the case when the carbon nanotube concentrate comprises multi-walled carbon nanotubes, and the ratio of intensities of G and D bands in the Raman spectrum for the light wavelength 532 nm is lower than 10. Carbon nanotubes in the concentrate can contain other carbon allotropes as impurities, including amorphous carbon or graphite, as well as traces of particles of metal or metal carbide used as a catalyst to produce carbon nanotubes, such as but not limited to iron or cobalt, or other metals, bimetallic particles, or alloys thereof. The presence of such impurities has no effect on the technical result.

The requirement of low input energy upon mixing, less than 0.5 kW·h per 1 kg mixture, is necessary to prevent degradation of the components of the polyurethane material, which can have an adverse effect on its physical and mechanical properties.

The requirement of low concentration of carbon nanotubes in the mixture with the components of the polyurethane material is necessary to ensure a relatively low viscosity of the mixture, as it is known that the introduction of disperse fillers with a large length to diameter ratio (and carbon nanotubes are such fillers) into a liquid dispersive medium substantially increases the viscosity of the obtained dispersion. The energy required to mix the dispersion increases along with its viscosity increase. Therefore, a low concentration of carbon nanotubes, i.e., less than 0.1 wt.% of the total mass of polyisocyanates (A) and compounds comprising NCO-reactive groups (B), is required to achieve sufficient mixing at low input energy. Preferably, the concentration of carbon nanotubes is less than 0.06 wt.%.

When introducing such a low amount of carbon nanotubes and mixing them with the components of the polyurethane mixture at such a low input energy, the volume resistivity of less than 10⁹ Ohm·cm for the material can only be achieved by providing a homogeneous distribution of well-dispersed carbon nanotubes, without coil-like agglomerates, which is a non-trivial task that cannot be solved when directly introducing carbon nanotube powder into the polyurethane components. The reason for this is that dispersing carbon tube agglomerates requires high energy and simultaneously high power density, as suggested in US 8945434 B2. Therefore, achieving the technical result requires that a carbon nanotube concentrate, which is a pre-dispersed mixture of carbon nanotubes with a liquid medium, is introduced into one of the components of the polyurethane material or the mixture thereof. The content of carbon nanotubes in the concentrate can be 1 to 80 wt.%. The carbon nanotube concentrate can be a paste, a plastic mixture, or a powder. The content of carbon nanotubes in the concentrate is based on the nature of the carbon nanotubes used, nature of the dispersing liquid phase, and the selected method of dispersion. The method for producing the carbon nanotube concentrate used to produce the conductive polyurethane material is beyond the scope of the present invention.

The dispersive medium can be selected from the series of substances consisting of ionic liquids, epoxy, polyester, polyacrylic, polyphenylsiloxane, or polyurethane resins of mineral, synthetic, or biological origin, oils, silicones, silanes, lipids, esters, fatty acids, as well as from the series of compositions of compounds used as plasticizers, active diluents, and de-aerators, and bi- and multi-component mixtures of the listed compounds may serve as the dispersive medium. For certain embodiments of the method, the carbon nanotube concentrate preferably comprises 20 to 99 wt.%. of one or several esters of aliphatic alcohols with phthalic acid, sebacic acid, adipic acid, or 1,2-cyclohexanedicarboxylic acid, e.g., dioctylphthalate, dibutylphthalate, diisononylphthalate, dioctylsebacate, dibutylsebacate, dibutyladipate, dioctyladipate, HEXAMOLL^{®} DINCH (1,2-cyclohexanedicarboxylic acid diisononyl ester), etc., but not limited to the provided examples. For other embodiments of the method, the carbon nanotube concentrate preferably comprises 20 to 99 wt.%. of one or several alcohols with general formula CₙH₂ₙ₋ₓ(OH)ₓ, where n and x are integers greater than 1, e.g., ethylene glycol, propylene glycol, 1,4-butanediol, 1,3-propanediol, diethylene glycol, polyethylene glycols, etc., but not limited to the provided examples.

Polyisocyanates (A) can be selected from any compounds known in the art to comprise, in the molecule, at least two isocyanate groups, such as aliphatic, cycloaliphatic, aromatic, or heterocyclic polyisocyanates, and mixtures thereof. For example, suitable aliphatic and cycloaliphatic polyisocyanates include di- or triisocyanates, such as butanediisocyanate, pentanediisocyanate, hexanediisocyanate (hexanemethylenediisocyanate, HMDI), 4-isocyanatomethyl1,8-octanediisocyanate (triisocyanatononane, TIN), and cyclic systems, such as, e.g., 4,4'-methylenebis(cyclohexylisocyanate), 3,5,5-trimethyl-1-isocyanato-3isocyanatomethylcyclohexane (isophorondiisocyanate, IPDI), as well as ω,ω'-diisocyanato-1,3-dimethylcyciohexane (H6XDI). Suitable aromatic polyisocyanates include, e.g., 1,5-naphthalenediisocyanate, diisocyanatodiphenylmethane (2,2'-, 2,4'-, and 4,4'-MDI or mixtures thereof), diisocyanatomethylbenzene (2,4- and 2,6-toluene diisocyanate, TDI) and technical mixtures of both isomers, as well as 1,3-bis(isocyanatomethyl)benzene (XDI). Moreover, examples include but not limited to TODI (3,3'-dimethyl-4,4'biphenyldiisocyanate), PPDI (1,4-paraphenylenediisocyanate) and CHDI (cyclohexyldiisocyanate).

Furthermore, suitable polyisocyanates (A) include known conversion products of the above-mentioned aliphatic, cycloaliphatic, aromatic, or heterocyclic polyisocyanates comprising carbodiimide, urethdione, allophanate, biureth and/or isocyanurate structures, as well as prepolymers obtained by reacting polyisocyanate with the compounds comprising groups that are reactive towards isocyanate groups.

Polyisocyanates (A) can be present in the solution. Suitable solvents include but not limited to acetone, methyl ethyl ketone, cyclohexanone, methyl isobutyl ketone, methyl isoamyl ketone, diisobutyl ketone, ethyl acetate, n-butyl acetate, ethylene glycol diacetate, butyrolactone, diethyl carbonate, propylene carbonate, ethylene carbonate, N,N-dimethyl formamide, N,N-dimethyl acetamide, Nmethylpyrrolidone, N-ethylpyrrolidone, methylal, ethylal, butylal, 1,3-dioxolane, glycerol formal, benzene, toluene, n-hexane, cyclohexane, naphta solvent, 2methoxypropyl acetate (MPA).

Compounds comprising NCO-reactive groups (B) can be selected from any compounds known in the art to comprise such groups, e.g., such as polyether polyols, polyester polyols, polycarbonate polyols and polyether amines, shortchain polyols and polyamines. These may include, but not limited to, e.g., lowmolecular weight diols, such as 1,2-ethanediol, 1,3- or 1,2-propanediols, 1,4-or 2,3-butanediols, 1,5-pentanediol, 1,6-hexanediol; triols, such as glycerol, trimethylolpropane; tetraols, e.g., pentaerythritol, as well as higher molecular weight polyhydroxy compounds, such as polyether polyols and polyester polyols, polycarbonate polyols, polysiloxane polyols, polyamines and polyether amines, as well as polybutadiene polyols; short-chain polyamines, diamines, triamines, such as diethylenetoluene diamine, 4,4'-methylenebis(2,6-diethyl)aniline, 4,4'methylenebis(2,6-diisopropyl)aniline, 4,4'-methylenebis(3-chloro-2,6diethyl)aniline, dimethylthiotoluene diamine, N,N'-di(secbutyl)aminobiphenylmethane, N,N'-disec-butyl-p-phenylene diamine, 3,3'-dichloro4,4'-diaminodiphenylmethane, trimethylene glycol di-p-aminobenzoate, hydroquinone di-3-hydroxyethyl ether.

Compounds comprising NCO-reactive groups (B) can also be present in the solution, e.g., in acetone, methyl ethyl ketone, cyclohexanone, methyl isobutyl ketone, methyl isoamyl ketone, diisobutyl ketone, ethyl acetate, n-butyl acetate, ethylene glycol diacetate, butyrolactone, diethylene carbonate, propylene carbonate, ethylene carbonate, N,N-dimethyl formamide, N,N-dimethyl acetamide, N-methylpyrrolidone, N-ethylpyrrolidone, methylal, ethylal, butylal, 1,3-dioxolane, glycerol formal, benzene, toluene, n-hexane, cyclohexane, naphta solvent, 2methoxypropyl acetate (MPA), but not limited to the provided examples. Furthermore, the solvents can also comprise groups that are reactive towards isocyanates, such as low-molecular weight diols (e.g., 1,2-ethanediol, 1,3- or 1,2propanediols, 1,4-butanediol), triols (e.g., glycerol, trimethylolpropane), as well as low-molecular weight diamines, such as, e.g., polyasparagine acid esters, but not limited to the provided examples.

Carbon nanotube concentrate can be mixed with (A) or (B), or with the mixture comprising organic polyisocyanates (A) and compounds (B), using any known mixing technique and mixing equipment, e.g., vertical-type mixers (also known as dissolvers), planetary mixers, rotor-stator type mixers, twin screw mixers or kneaders, but not limited to the provided examples. If the selection of equipment and techniques is limited by those available at a particular production site, devices intended for dispersing can also be used, e.g., colloid mills, three-roll mills, bead mills, planetary mills, ball mills, etc., but not limited to the provided examples. A prerequisite is that the input specific energy is less than 0.5 kW·h/kg per the mixture. Most preferably, mixing is performed using a disk dissolver, i.e., a vertical-type mixer with a toothed disk impeller, at a rotation rate of the impeller outer edge less than 15 m/sec, so that the energy input rate is less than 0.5 kW·h per 1 kg of the mixture to be processed.

The composition of the polyurethane composite material can also include various auxiliary compounds and/or additives. The auxiliary components of the polyurethane composite material can be selected from a broad range of catalysts, inhibitors, foaming agents, antifoaming agents, dyes, pigments, fillers, crosslinkers, rheology modifiers (plasticizers, thickeners, thixotropic additives), surface modifiers, flame retardants, UV-protecting compounds, antioxidants, stabilizers, antimicrobial and/or antifungal additives known to the persons of ordinary skill in the art of polyurethane materials.

Suitable inhibitors in the polyurethane composite material may include, but not limited to, aliphatic carboxylic acids, derivatized phenolic compounds, derivatized lactones, derivatized hydroquinones, or other agents known to the persons of ordinary skill in the art of polyurethane materials. Suitable catalysts may include, but not limited to, amines, such as 1,4-diazabicyclo[2.2.2]octane (DABCO), dibutyltin dilaurate, tin (2+) caprylate, triethylamine, pyridine, alkali metal hydroxides and alcoholates, alkali salts of carboxylic acids, compounds of lead, antimony, zinc, copper, cobalt, acetylacetonates and other chelate complexes of metals, or other agents known to the persons of ordinary skill in the art of polyurethane materials. Suitable foaming agents may include, but not limited to, water, hydrofluorolefins, pentanes, methyl formates, carbon dioxide, fluoro carbons, and other foaming agents known to the persons of ordinary skill in the art. Suitable antifoaming agents in the polyurethane composite material may include, but not limited to, organosilicon antifoaming agents, silicone-free polymeric antifoaming agents, silicone polymeric antifoaming agents, or other agents known to the persons of ordinary skill in the art of polyurethane materials. Suitable mineral fillers may include, but not limited to, chalk, silicates, zeolites, dolomite, aluminum hydroxide. These fillers known in the chemistry of polyurethanes can be present in the concentrations up to 25 wt.% based on the mass of polyurethane. The fillers can also comprise additional additives to enhance conductivity apart from single walled carbon nanotubes, such as, e.g., multi-walled carbon nanotubes, conductive soot, carbon fibers. Suitable compounds to improve rheological properties may include, but not limited to, e.g., ethylene carbonate, propylene carbonate, diesters, citric acid ester, etc. Suitable thickeners or thixotropic additives may include, but not limited to, e.g., amorphous silica, etc. Suitable flame retardants may include, but not limited to, e.g., aluminum hydroxide, magnesium hydroxide, ammonium polyphosphate or antipyrenes based on halo- and phosphorus-containing compounds, metalcontaining complexes with amines, etc. Suitable UV-protecting compounds may include, but not limited to, e.g., ethyl 4[[(methylphenylamino)methylene]amino]benzoate, 2-(2H-benzotriazol-2-yl)-pcresol, etc. Suitable antioxidants may include, but not limited to, e.g., pentaerythritol tetrakis(3-(3,5-ditert-butyl-4-hydroxyphenyl)propionate), tris(2,4ditretbutylphenyl)phosphite, etc. Suitable stabilizers may include, but not limited to, e.g., 2,6-ditert-butyl-4-methylphenol, 2,2-di-(4-methyl-6-tert-butylphenol)methane, etc. Suitable antimicrobial and antifungal additives may include, but not limited to, 10,10-oxybisphenoxyarsine, trichlorohydroxydiphenyl ester, Nfluorodichloromethylthiophtalimide, etc.

In certain embodiments, one or several auxiliary components of the polyurethane composite material are preferably introduced at the step of mixing the carbon nanotube concentrate with compounds (B) or with polyisocyanates (A), or with a mixture comprising organic polyisocyanates (A) and compounds (B). In this case, it may be preferred to premix the carbon nanotube concentrate with one or several auxiliary components of the polyurethane composite material before the step of mixing with compounds (B) or with polyisocyanates (A), or with a mixture comprising organic polyisocyanates (A) and compounds (B).

In certain embodiments of the method, it preferably further comprises one or several steps, wherein one or several auxiliary components of the polyurethane composite material selected from the series of a catalyst, an inhibitor, a foaming agent, an antifoaming agent, a dye, a coloring pigment, a filler, a cross-linker, a plasticizer, a thickener, a thixotropic additive, a surface modifier, a flame retardant, a UV-protecting compound, an antioxidant, a stabilizer, an antimicrobial additive, an antifungal additive, are introduced into the material.

The obtained mixture of components (A), (B), carbon nanotube concentrate, and all necessary auxiliary components is applied, or sprayed, or die-cast, or poured onto a substrate, or injected into a preheated metal mold, and is cured at an elevated or room temperature. The mixture is degassed, if necessary. All these operations after mixing the carbon nanotube concentrate with component (A), or with component (B), or with a mixture comprising organic polyisocyanates (A) and compounds (B) and until obtaining a part or a coating made of the polyurethane composite material can be performed similarly to any method known to the persons of ordinary skill in the art of polyurethane materials. The selection of a procedure, injection pressure, curing temperature and other process parameters at these steps is determined by the chemical composition of components (A) and (B), composition of auxiliary additives, type of the part or coating to be produced, and equipment used at the specific production site.

The present invention provides a conductive polyurethane composite material, where the material is obtained by reacting organic polyisocyanates (A) with one or several compounds comprising NCO-reactive groups (B), wherein the method of producing the material comprises mixing the carbon nanotube concentrate with compounds (B) or with polyisocyanates (A), or with a mixture comprising organic polyisocyanates (A) and compounds (B), at the input energy less than 0.5 kW·h per 1 kg mixture, with the content of carbon nanotubes less than 0.1 wt.% of the total mass of organic polyisocyanates (A) and compounds (B).

Preferably, carbon nanotubes in the obtained conductive polyurethane composite material are well dispersed, i.e., more than 90 wt.% of carbon nanotubes are present in agglomerates with the diameter less than 40 µm. The diameter of agglomerates of carbon nanotubes is understood as the diameter of a circle having the same perimeter as the microphotograph of the agglomerate (Equivalent Circular Perimeter Diameter (ECPD) method). Most preferably, carbon nanotubes in the obtained conductive polyurethane composite material are well dispersed, i.e., more than 90 wt.% of carbon nanotubes are present in agglomerates with the diameter less than 20 µm. The diameter of agglomerates of carbon nanotubes is understood as the diameter of a circle having the same perimeter as the microphotograph of the agglomerate (Equivalent Circular Perimeter Diameter (ECPD) method). However, the technical result can also be achieved if these small agglomerates contain less than 90 wt.% of carbon nanotubes.

Note that thus obtained material has a stable conductivity of less than 10⁹ Ohm·cm with the CNT content less than 0.1 wt.% of the total mass of the material that does not depend on environmental conditions, can be colored in any color depending on dyes and/or pigments used in its composition, can be foamed, solid, or syntactic depending on additionally introduced foaming agents, crosslinkers, and fillers.

In certain embodiments of the present invention, the obtained polyurethane composite material can be a foam with a density 20 to 1000 kg/m³ having a volume resistivity of 10 to 10⁹ Ohm·cm. In other embodiments of the present invention, the obtained polyurethane composite material can be a syntactic cellular plastic with a density 500 to 2000 kg/m³ having a volume resistivity of 10 to 10⁹ Ohm·cm. In still other embodiments of the present invention, the obtained polyurethane composite material can be a solid material with a density 800 to 2000 kg/m³ having a volume resistivity of 10 to 10⁹ Ohm·cm.

The invention is illustrated by examples and drawings provided below. The examples and drawings are provided to better illustrate the solutions to the technical problem provided by the invention and do not exhaust all possible embodiments of the invention. Volume resistivity of the materials provided in the examples was measured according to ASTM D257. Density of polyurethanes was determined according to ASTM D7487-18 and DIN EN ISO 845-1995-06. Examples 16-18 are Comparative Examples, which are provided to illustrate that the technical result is not achieved without substantial features of the present invention.

### Brief Description of the Attached Drawings

**Fig. 1** shows a microphotograph of single-walled carbon nanotubes in the carbon nanotube concentrate used in Examples 1-3.
**Fig. 2** shows a microphotograph of the polyurethane composite material of Example 1.
**Fig. 3** shows a histogram of distribution of the number of agglomerates (N) by their diameter (D) in the material of Example 1.
**Fig. 4** shows a microphotograph of the polyurethane composite material of Example 2.
**Fig. 5** shows a histogram of distribution of the number of agglomerates (N) by their diameter (D) in the material of Example 2.
**Fig. 6** shows a microphotograph of the polyurethane composite material of Example 6.
**Fig. 7** shows a histogram of distribution of the number of agglomerates (N) by their diameter (D) in the material of Example 6.
**Fig. 8** shows a microphotograph of the polyurethane composite material of Example 9.
**Fig. 9** shows a histogram of distribution of the number of agglomerates (N) by their diameter (D) in the material of Example 9.
**Fig. 10** shows a microphotograph of single-walled and double-walled carbon nanotubes in the carbon nanotube concentrate used in Example 13.
**Fig. 11** shows a microphotograph of the polyurethane composite material of Example 13.
**Fig. 12** shows a histogram of distribution of the number of agglomerates (N) by their diameter (D) in the material of Example 13.
**Fig. 13** shows a microphotograph of the polyurethane composite material of Example 16 (Comparative).
**Fig. 14** shows a histogram of distribution of the number of agglomerates (N) by their diameter (D) in the material of Example 16 (Comparative).

### Detailed Description of Embodiments of the invention

### Examples

### The best embodiment

### Example 1.

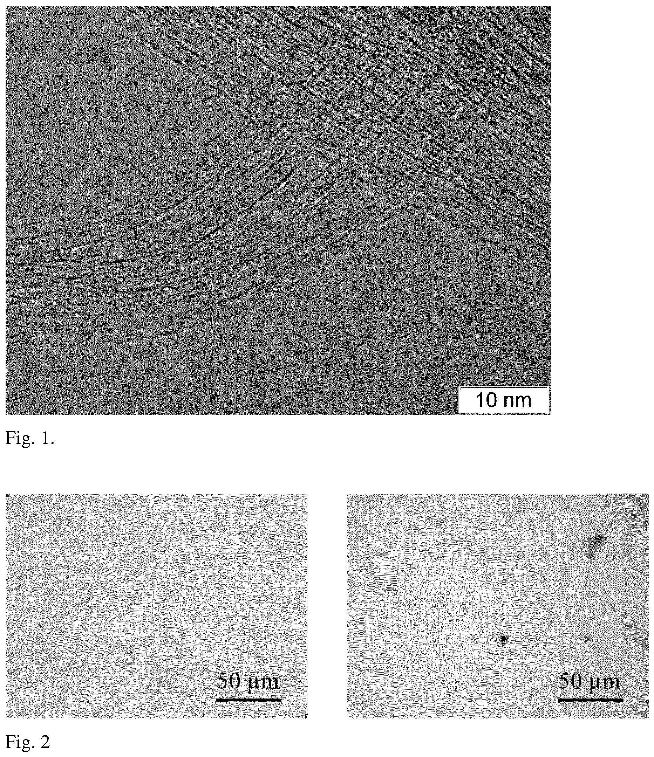

In a 2 liter metal container, 884.7 g of a commercially available mixture of toluene diisocyanate (A) and polyester comprising NCO-reactive groups (B) (prepolymer SKU-PFL 74 by SUREL LLC, Russian Federation) were mixed with 0.5 g of carbon nanotube concentrate comprising 10 wt.% TUBALL^{™} single walled carbon nanotubes and 90 wt.% 1,2-cyclohexanedicarboxylic acid diisononyl ester (diisononylcyclohexane-1,2-dicarboxylate). **Fig. 1** shows a microphotograph of single-walled carbon nanotubes used for producing the carbon nanotube concentrate. The ratio of intensities of G and D bands in the Raman spectrum for light wavelength 532 nm by the carbon nanotube concentrate is 62. The mixing step was performed using an overhead stirrer with a 40 mm toothed disk impeller at rotation speed of 15 m/sec (7100 rpm) for 3 min. Then the rotation speed was reduced to 2 m/sec (960 rpm), and the mixture was degassed under vacuum for 5 min upon stirring. The total input energy was 0.16 kW·h, which amounted to 0.18 kW·h per 1 kg mixture. Then 114.8 g of curing agent 4,4'-methylenebis(2-chloroaniline), MOCA, which was pre-melted at 112°C, was added to the mixture, and the mixture was stirred at impeller rotation speed 2 m/sec (960 rpm) for 1 min upon degassing. The SWCNT content in the obtained mixture of polyisocyanates (A) and compounds comprising NCO-reactive groups
(B) was 0.005 wt.%. The obtained mixture was poured into a metal mold preheated to 110°C and cured in a drying oven at 110°C for 1 hour.

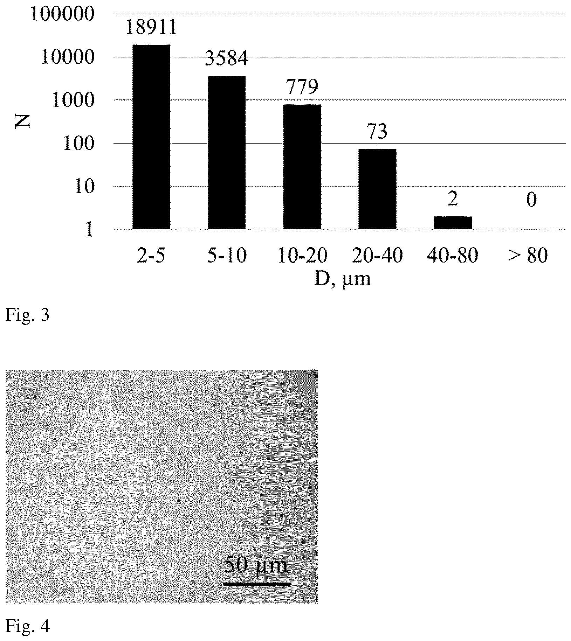

**Fig. 2** shows examples of microphotographs of thus obtained polyurethane composite material. Large, elongated agglomerates (SWCNT bundles) and irregular agglomerates (SWCNT coils) can be readily seen. **Fig. 3** shows a histogram of distribution of the number of agglomerates (N) by their diameter (D), which was obtained from the analysis of 50 microphotographs. Diameter (D) was assumed to be the diameter of a circle having the same perimeter as the microphotograph of the agglomerate (Equivalent Circular Perimeter Diameter (ECPD) method). The histograms allow evaluating the minimum mass fraction of agglomerates with diameter less than 40 µm. Since agglomerates differ in shape, the masses of two agglomerates of equal diameter but different shape can be different. A reliable estimate of the minimum mass fraction of agglomerates with diameter less than 40 µm can be obtained by assuming that agglomerate mass it proportional to the third degree of its diameter. For the obtained composite polyurethane material, such estimate demonstrates that more than 90 wt.% SWCNT are in agglomerates with diameter less than 40 µm. The obtained composite polyurethane material has volume resistivity of 10⁷ Ohm·cm, and it is therefore conductive (antistatic) at the SWCNT content of 0.005 wt.%. The density of the material is 1100 kg/m³. The obtained conductive composite polyurethane material has a tensile strength of 45.7 MPa, while the tensile strength of a material of a similar composition without the SWCNT concentrate was 45.3 MPa. Thus, mechanical processing at the step of mixing the components of the polyurethane material with the CNT concentrate did not cause degradation of the components of the polyurethane material and deterioration of its physical and mechanical properties compared to the CNT-free material.

### Embodiments.

### Example 2.

In a 2 liter metal container, 880.7 g of commercially available mixture of toluene diisocyanate (A) and polyester comprising NCO-reactive groups (B) (prepolymer SKU-PFL 74 by SUREL LLC, Russian Federation) were mixed with 5 g of carbon nanotube concentrate comprising 10 wt.% TUBALL^{™} single-walled carbon nanotubes and 90 wt.% 1,2-cyclohexanedicarboxylic acid diisononyl ester (diisononylcyclohexane-1,2-dicarboxylate). **Fig. 1** shows a microphotograph of single-walled carbon nanotubes used for producing the carbon nanotube concentrate. The ratio of intensities of G and D bands in the Raman spectrum for light wavelength 532 nm by the carbon nanotube concentrate is 62. The mixing step was performed using an overhead stirrer with a 40 mm toothed disk impeller at rotation speed of 15 m/sec (7100 rpm) for 3 min. Then the rotation speed was reduced to 2 m/sec (960 rpm), and the mixture was degassed under vacuum for 5 min upon stirring. The total input energy was 0.2 kW·h, which amounted to 0.23 kW·h per 1 kg mixture. Then 114.3 g of curing agent 4,4'-methylenebis(2-chloroaniline), MOCA, which was pre-melted at 112°C, was added to the mixture, and the mixture was stirred at impeller rotation speed 2 m/sec (960 rpm) for 1 min upon degassing. The obtained mixture was poured into a metal mold pre-heated to 110°C and cured in a drying oven at 110°C for 1 hour.

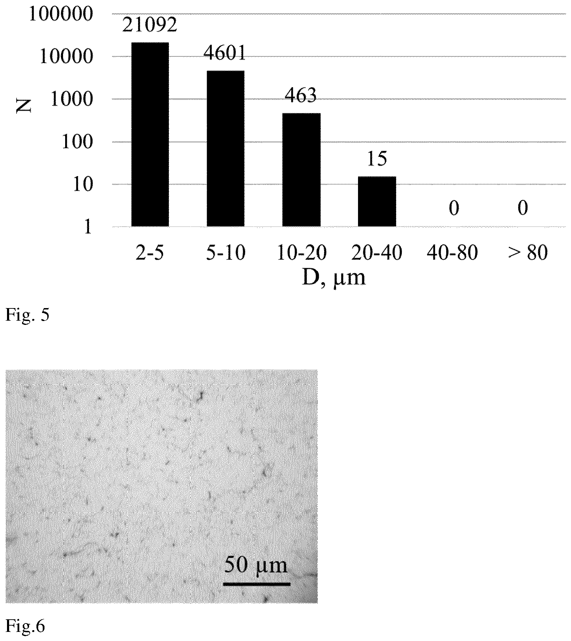

**Fig. 4** shows an example of microphotograph of thus obtained polyurethane composite material. **Fig. 5** shows a histogram of distribution of the number of agglomerates by their diameter, which was obtained from the analysis of 50 microphotographs. For the obtained composite polyurethane material, all observed agglomerates have diameter less than 40 µm, and more than 90 wt.% SWCNT are in agglomerates with diameter less than 20 µm. The obtained composite polyurethane material has a volume resistivity of 10⁴ Ohm·cm, and it is therefore conductive (antistatic) at the SWCNT content of 0.05 wt.%. The density of the material is 1100 kg/m³. The obtained conductive composite polyurethane material has a tensile strength of 45.1 MPa, while the tensile strength of a material of a similar composition without the SWCNT concentrate was 45.3 MPa. Thus, mechanical processing at the step of mixing the components of the polyurethane material with the CNT concentrate did not cause degradation of the components of the polyurethane material and deterioration of its physical and mechanical properties compared to the CNT-free material.

### Example 3.

In a 2 liter metal container, 819.9 g of commercially available mixture of toluene diisocyanate (A) and polyester comprising NCO-reactive groups (B) (prepolymer SKU-PFL 100 by SUREL LLC, Russian Federation), 16.4 g of titanium dioxide, 16.4 g of red pigment paste, 1.5 g of concentrate comprising 10 wt.% TUBALL^{™} single-walled carbon nanotubes and 90 wt.% 1,2-cyclohexanedicarboxylic acid diisononyl ester (diisononylcyclohexane-1,2-dicarboxylate) were mixed. **Fig. 1** shows a microphotograph of single-walled carbon nanotubes used for producing the carbon nanotube concentrate. The ratio of intensities of G and D bands in the Raman spectrum for light wavelength 532 nm by the carbon nanotube concentrate is 62. The mixing step was performed using an overhead stirrer with a 40 mm toothed disk impeller at rotation speed of 15 m/sec (7100 rpm) for 3 min. Then the rotation speed was reduced to 2 m/sec (960 rpm), and the mixture was degassed under vacuum for 5 min upon stirring. The total input energy was 0.1 kW·h, which amounted to 0.12 kW·h per 1 kg mixture. Then 145.8 g of curing agent 4,4'methylenebis(2-chloroaniline), MOCA, which was pre-melted at 112°C, was added to the mixture, and the mixture was stirred at impeller rotation speed 2 m/sec (960 rpm) for 1 min upon degassing. The obtained mixture was poured into a metal mold pre-heated to 110°C and cured in a drying oven at 110°C for 1 hour.

For the obtained colored polyurethane composite material, more than 92 wt.% SWCNT are in agglomerates with diameter less than 40 µm. The obtained composite polyurethane material has a volume resistivity of 10⁶ Ohm·cm, and it is therefore conductive (antistatic) at the SWCNT content of 0.015 wt.%. The density of the material is 1100 kg/m³. The coating was assigned a color index of 3018 according to the RAL standard. The produced conductive composite polyurethane material has tensile strength 47.1 MPa, while tensile strength of a material of similar composition without SWCNT concentrate was 46.6 MPa. Thus, mechanical processing at the step of mixing the components of the polyurethane material with the CNT concentrate did not cause degradation of the components of the polyurethane material and deterioration of its physical and mechanical properties compared to the CNT-free material.

### Example 4.

In a 2 liter metal container, 99 g of a commercially available polyol based on polyester Isolan 430/150 (B) and 2 g of the SWCNT concentrate comprising 5 wt.% TUBALL^{™} single-walled carbon nanotubes and 95 wt.% 1,2cyclohexanedicarboxylic acid diisononyl ester (diisononylcyclohexane-1,2dicarboxylate) were mixed. The ratio of intensities of G and D bands in the Raman spectrum for light wavelength 532 nm by the carbon nanotube concentrate is 61. The mixing step was performed using an overhead stirrer with a 40 mm toothed disk impeller at rotation speed of 4 m/sec (2100 rpm) for 5 min. The total input energy was 0.08 kW·h, which amounted to 0.09 kW·h per 1 kg mixture. Then 99 g methyl diphenyl diisocyanate (MDI) (A) was added to the mixture, and the mixture was stirred at impeller rotation speed 4 m/sec (2000 rpm) for 6 sec. The obtained mixture was poured into a mold and cured at a room temperature for 1 hour.

For the obtained rigid foamed composite polyurethane material, more than 91 wt.% SWCNT are in agglomerates with diameter less than 40 µm. The obtained composite polyurethane material has a volume resistivity of 10⁶ Ohm·cm, and it is therefore conductive (antistatic) at the SWCNT content of 0.05 wt.%. The density of the obtained conductive composite rigid foamed polyurethane material was 154 kg/m³, while the density of a material of a similar composition without the SWCNT concentrate was 150 kg/m³. Thus, mechanical processing at the step of mixing the components of the polyurethane material with the CNT concentrate did not cause degradation of the components of the polyurethane material and deterioration of its physical and mechanical properties compared to the CNT-free material.

### Example 5.

In 2 liter metal container, 91.2 g of a polyol based on polyester Voralast XCP2016 (B) and 14.0 g of concentrate comprising 1 wt.% TUBALL^{™} single-walled carbon nanotubes and 99 wt.% 1,2-cyclohexanedicarboxylic acid diisononyl ester (diisononylcyclohexane-1,2-dicarboxylate) were mixed. The ratio of intensities of G and D bands in the Raman spectrum for light wavelength 532 nm by the carbon nanotube concentrate is 59. At this step, 10.6 g cross-linker Voralast GT 986 is also introduced. The mixing step was performed using an overhead stirrer with a 40 mm toothed disk impeller at rotation speed of 4 m/sec (2100 rpm) for 5 min. The total input energy was 0.07 kW·h, which amounted to 0.085 kW·h per 1 kg mixture. Then 84.9 g isocyanate Voralast GT 967 (A) was added to the mixture, and the mixture was stirred at impeller rotation speed 4 m/sec (2000 rpm) for 6 sec. The obtained mixture was poured into a mold and cured at a room temperature for 1 hour.

For the obtained soft foamed composite polyurethane material, more than 90 wt.% SWCNT are in agglomerates with diameter less than 40 µm. The obtained composite polyurethane material has a volume resistivity of 10⁷ Ohm·cm, and it is therefore conductive (antistatic) at the SWCNT content of 0.07 wt.%. The density of the obtained conductive composite rigid foamed polyurethane material was 445 kg/m³, while the density of a material of a similar composition without the SWCNT concentrate was 450 kg/m³. Thus, mechanical processing at the step of mixing the components of the polyurethane material with the CNT concentrate did not cause degradation of the components of the polyurethane material and deterioration of its physical and mechanical properties compared to the CNT-free material.

### Example 6.

In 2 liter metal container, 844.8 g of a commercially available mixture of toluene diisocyanate (A) and polyester comprising NCO-reactive groups (B) (prepolymer SKU-PFL 100 by SUREL LLC, Russian Federation) were mixed with 4.95 g of concentrate comprising 20 wt.% TUBALL^{™} single-walled carbon nanotubes and 80 wt.% 1,2-cyclohexanedicarboxylic acid diisononyl ester (diisononylcyclohexane-1,2-dicarboxylate). The ratio of intensities of G and D bands in the Raman spectrum for light wavelength 532 nm by the carbon nanotube concentrate is 52. The mixing step was performed using a three-roll mill with roller diameter 150 mm; rotation speed of the fast roller 182 rpm; roller speed ratio 1:2.2:5.3; gaps between all rollers 20 µm; maintained roller temperature 30°C; number of treatment cycles 7. The total input energy was 0.4 kW·h, which amounted to 0.45 kW·h per 1 kg mixture. Then 150.3 g of curing agent 4,4'methylenebis(2-chloroaniline), MOCA, which was pre-melted at 112°C, was added to the mixture, and the mixture was stirred using the three-roll mill under the same conditions for 4 more cycles to achieve homogeneous distribution of the components in the mixture. The obtained mixture was spread into a metal mold pre-heated to 110°C and cured in a drying oven at 1 10°C for 1 hour.

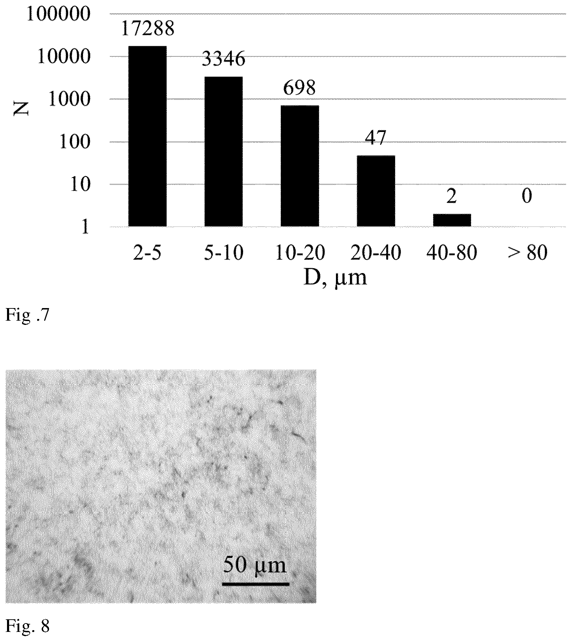

**Fig. 6** shows an example of microphotograph of thus obtained polyurethane composite material. **Fig. 7** shows a histogram of distribution of the number of agglomerates by their diameter, which was obtained from the analysis of 50 microphotographs. For the obtained composite polyurethane material, more than 94 wt.% SWCNT are in agglomerates with diameter less than 40 µm. The obtained composite polyurethane material has a volume resistivity 50 Ohm·cm, and it is therefore conductive (antistatic) at the SWCNT content of 0.099 wt.%. The density of the material is 1100 kg/m³. The produced conductive composite polyurethane material has tensile strength 47.3 MPa, while tensile strength of a material of similar composition without SWCNT concentrate was 46.6 MPa. Thus, mechanical processing at the step of mixing the components of the polyurethane material with the CNT concentrate did not cause degradation of the components of the polyurethane material and deterioration of its physical and mechanical properties compared to the CNT-free material.

### Example 7.

In a 2 liter metal container, 885.1 g of a commercially available mixture of toluene diisocyanate (A) and polyester comprising NCO-reactive groups (B) (prepolymer SKU-PFL 74 by SUREL LLC, Russian Federation) were mixed with 0.025 g of the carbon nanotube concentrate comprising 40 wt.% TUBALL^{™} single walled carbon nanotubes and 60 wt.% 1,2-cyclohexanedicarboxylic acid diisononyl ester (diisononylcyclohexane-1,2-dicarboxylate). The ratio of intensities of G and D bands in the Raman spectrum for light wavelength 532 nm by the carbon nanotube concentrate is 53. The mixing step was performed using an overhead stirrer with a 40 mm toothed disk impeller at rotation speed of 15 m/sec (7100 rpm) for 3 min. Then the rotation speed was reduced to 2 m/sec (960 rpm), and the mixture was degassed under vacuum for 5 min upon stirring. Total input energy was 0.02 kW·h, which amounted to 0.023 kW·h per 1 kg mixture. Then 114.9 g of curing agent 4,4'-methylenebis(2-chloroaniline), MOCA, which was pre-melted at 112°C, was added to the mixture, and the mixture wa s stirred at impeller rotation speed 2 m/sec (960 rpm) for 1 min upon degassing. The obtained mixture was poured into a metal mold pre-heated to 110°C and cu red in a drying oven at 110°C for 1 hour.

For the obtained composite polyurethane material, more than 92 wt.% SWCNT are in agglomerates with diameter less than 40 µm. The obtained composite polyurethane material has a volume resistivity of 1·10⁹ Ohm·cm, and it is therefore conductive (antistatic) at the SWCNT content of 0.001 wt.%. The density of the material is 1100 kg/m³. The produced conductive composite polyurethane material has tensile strength 45.0 MPa, while tensile strength of a material of similar composition without SWCNT concentrate was 45.3 MPa. Thus, mechanical processing at the step of mixing the components of the polyurethane material with the CNT concentrate did not cause degradation of the components of the polyurethane material and deterioration of its physical and mechanical properties compared to the CNT-free material.

### Example 8.

1 kg of polyurethane antistatic composite material was prepared by reacting an organic polyisocyanate (A) with a compound (B) comprising NCO-reactive groups and mixing the carbon nanotube concentrate with the mixture of (A) and (B) at the energy input 0.22 kW·h per 1 kg mixture. In a 2 liter metal container, 883.6 g of a prepolymer based on polyester and toluene diisocyanate (TDI) SKU-PFL 74 (A), 114.7 g of curing agent 4,4'-methylenebis(2-chloroaniline), MOCA, which was premelted at 112°C, (B), and the mixture was stirred at rotation speed of the toothed disk impeller 2 m/sec (960 rpm) for 1 min upon degassing. Then 0.1 g of the carbon nanotube concentrate comprising 30 wt.% TUBALL^{™} SWCNT and 70 wt.% of a mixture of 1,2-cyclohexanedicarboxylic acid diisononyl ester (diisononylcyclohexane-1,2-dicarboxylate), dibutylphthalate and dioctylphthalate (2:2:1 wt.) were added to the mixture of (A) and (B). The ratio of intensities of G and D bands in the Raman spectrum for light wavelength 532 nm by the carbon nanotube concentrate is 56. Mixing was performed using a dissolver with a 40 mm toothed disk impeller at rotation speed 15 m/sec (7100 rpm) for 3 min. Then the rotation speed was reduced to 2 m/sec (960 rpm), and the mixture was degassed under vacuum for 5 min upon stirring. The obtained mixture was poured into a metal mold pre-heated to 110°C and cured in a dryin g oven at 110°C for 1 hour.

For the obtained composite polyurethane material, more than 95 wt.% SWCNT are in agglomerates with diameter less than 40 µm. The obtained composite polyurethane material has a volume resistivity of 1·10⁶Ohm·cm, and it is therefore conductive (antistatic) at SWCNT content of 0.05 wt.%. The density of the material is 1100 kg/m³. The produced conductive composite polyurethane material has tensile strength 45.8 MPa, while tensile strength of a material of similar composition without SWCNT concentrate was 45.3 MPa. Thus, mechanical processing at the step of mixing the components of the polyurethane material with the CNT concentrate did not cause degradation of the components of the polyurethane material and deterioration of its physical and mechanical properties compared to the CNT-free material.

### Example 9.

250 g of the polyurethane antistatic composite material were produced by reacting an organic polyisocyanate (A) with a compound (B) comprising NCOreactive groups and mixing carbon nanotube concentrate into (A) at the energy input 0.12 kW·h per 1 kg mixture. In a 500 ml container, 211.7 g of prepolymer PERMAQURE^{®} EX-HS-2764 (A) and 0.094 g of the carbon nanotube concentrate comprising 15 wt.% TUBALL^{™} SWCNT, 25 wt.% multi-walled carbon nanotubes with an average diameter 9 nm, and 60 wt.% dibutyl phthalate were mixed. The ratio of intensities of G and D bands in the Raman spectrum for light wavelength 532 nm by the carbon nanotube concentrate is 12. Mixing was performed using a 500 ml planetary mixer at rotation speed 300 rpm for 20 minutes. Then 38.2 g of cross-linker PERMAQURE^{®} XR-2703 (B) was added to the obtained mixture, and the mixture was stirred using the planetary mixer at rotation speed of 300 rpm for 5 min upon degassing. The obtained mixture was poured into a metal mold preheated to 160°C and cured in a drying oven at 160°C for 5 minutes.

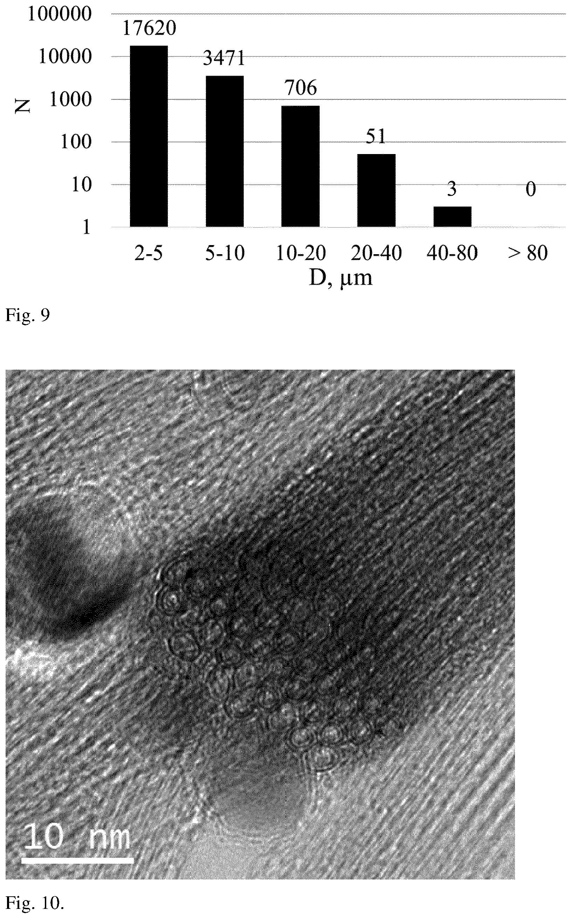

**Fig. 8** shows an example of microphotograph of thus obtained polyurethane composite material. **Fig. 9** shows a histogram of distribution of the number of agglomerates by their diameter, which was obtained from the analysis of 50 microphotographs. For the obtained polyurethane composite material, more than 90 wt.% carbon nanotubes are in agglomerates with a size of less than 40 µm. The obtained composite polyurethane material has a volume resistivity of 1·10⁶ Ohm·cm, and it is therefore conductive (antistatic) at carbon nanotube content of 0.015 wt.%. The density of the material is 900 kg/m³.

### Example 10.

In a metal 2 liter container, 98.0 g of a polyol based on Voralast XCP-2016 polyester (B), 10.6 g of cross-linker Voralast GT 986, 0.2 g of concentrate comprising 50 wt.% TUBALL^{™} single-walled carbon nanotubes and 50 wt.% diethylene glycol were mixed. The ratio of intensities of G and D bands in the Raman spectrum for light wavelength 532 nm by the carbon nanotube concentrate is 32. The mixing step was performed using an overhead stirrer with a 40 mm toothed disk impeller at rotation speed of 4 m/sec (2100 rpm) for 5 min. The total input energy was 0.07 kW·h, which amounted to 0.085 kW·h per 1 kg mixture. Then 91.2 g isocyanate Voralast GT 967 (A) was added to the mixture, and the mixture was stirred at impeller rotation speed 4 m/sec (2000 rpm) for 6 sec. The obtained mixture was poured into a mold and cured at a room temperature for 1 hour.

For the obtained foamed polyurethane composite material, more than 91 wt.% SWCNT are in agglomerates with diameter less than 40 µm. The obtained composite polyurethane material has a volume resistivity of 1·10⁸ Ohm·cm, and it is therefore conductive (antistatic) at SWCNT content of 0.05 wt.%. The density of the obtained conductive foamed composite polyurethane material was 449 kg/m³, while the density of a material of similar composition without the SWCNT concentrate was 450 kg/m³. Thus, mechanical processing at the step of mixing the components of the polyurethane material with the CNT concentrate did not cause degradation of the components of the polyurethane material and deterioration of its physical and mechanical properties compared to the CNT-free material.

### Example 11.

1 kg of the polyurethane antistatic composite material was produced by reacting an organic polyisocyanate (A) with a compound (B) comprising NCOreactive groups and mixing carbon nanotube concentrate with the mixture of (A) and (B) and a spherical filler, colloid silicon dioxide. The step of mixing 804.3 g of a prepolymer based on polyester and toluene diisocyanate (TDI) SKU-PFL 100 (A) with 143.0 g of curing agent 4,4'-methylenebis(2-chloroaniline), MOCA, which was pre-melted at 112°C, ( B) was performed using a three-roll mill with roller diameter 150 mm; rotation speed of the fast roller 182 rpm; roller speed ratio 1:2.2:5.3; gaps between all rollers 20 µm; maintained roller temperature 30°C; number of treatment cycles 7. Then 13.2 g of the carbon nanotube concentrate comprising 75 wt.% TUBALL^{™} SWCNT and 25 wt.% dibutyl phthalate, 40 g of colloid silicon dioxide were added to the mixture, and the mixture was stirred using the three-roll mill under the same conditions for 4 more cycles to achieve homogeneous distribution of the components in the mixture. The ratio of intensities of G and D bands in Raman spectrum for light with wavelength 532 nm by the used carbon nanotube concentrate is 56. The obtained mixture was spread into a metal mold pre-heated to 110°C and cured in a drying oven at 1 10°C for 1 hour. The total input energy was 0.4 kW·h, which amounted to 0.45 kW·h per 1 kg mixture.

For the obtained syntactic polyurethane composite material, more than 94 wt.% SWCNT are in agglomerates with diameter less than 40 µm. The obtained composite polyurethane material has a volume resistivity 50 Ohm·cm, and it is therefore conductive (antistatic) at the SWCNT content of 0.099 wt.%. The density of the material is 960 kg/m³.

The obtained conductive composite polyurethane material had a tensile strength 47.2 MPa, while tensile strength of a material of similar composition without carbon nanotubes was 46.6 MPa. Thus, mechanical processing at the step of mixing the components of the polyurethane material with the CNT concentrate did not cause degradation of the components of the polyurethane material and deterioration of its physical and mechanical properties compared to the CNT-free material.

### Example 12.

In a 2 liter metal container, 925.9 g of a commercially available prepolymer (A) with polyester comprising NCO-reactive groups (B) (prepolymer IMPRANIL^{®} HS80) and 0.1 g of the carbon nanotube concentrate comprising 10 wt.% TUBALL^{™} single-walled carbon nanotubes and 90 wt.% of a mixture of 1,2cyclohexanedicarboxylic acid diisononyl ester (diisononylcyclohexane-1,2dicarboxylate), diethylene glycol and glycerol (2:1:0.5 wt.) were mixed. The ratio of intensities of G and D bands in the Raman spectrum for light wavelength 532 nm by the carbon nanotube concentrate is 54. The mixing step was performed using an overhead stirrer with a 40 mm toothed disk impeller at rotation speed of 15 m/sec (7100 rpm) for 3 min. Then the rotation speed was reduced to 2 m/sec (960 rpm), and the mixture was degassed under vacuum for 5 min upon stirring. Total input energy was 0.02 kW·h, which amounted to 0.023 kW·h per 1 kg mixture. Then 174.0 g of cross-linker IMPRAFIX^{®} HS-C was added to the mixture, and the mixture was stirred at impeller rotation speed 2 m/sec (960 rpm) for 1 min upon degassing. The obtained mixture was poured into a metal mold pre-heated to 160°C and cured in a drying oven at 160°C for 5 min utes.

For the obtained composite polyurethane material, more than 91 wt.% SWCNT are in agglomerates with diameter less than 40 µm. The obtained composite polyurethane material has a volume resistivity of 1·10⁹ Ohm·cm, and it is therefore conductive (antistatic) at the SWCNT content of 0.001 wt.%. The density of the material is 1000 kg/m³. The obtained conductive composite polyurethane material had a tensile strength 24.9 MPa, while tensile strength of a material of similar composition without SWCNT was 25.0 MPa. Thus, mechanical processing at the step of mixing the components of the polyurethane material with the carbon nanotube concentrate did not cause degradation of the components of the polyurethane material and deterioration of its physical and mechanical properties compared to the material free of carbon nanotubes.

### Example 13.

In a 2 liter metal container, 884.4 g of a commercially available prepolymer IMPRANIL^{®} HS-130 (A) with polyester comprising NCO-reactive groups (B) and 0.63 g of the carbon nanotube concentrate comprising 80 wt.% of a mixture of single-walled and double-walled carbon nanotubes and 20 wt.% of a mixture of 1,2-cyclohexanedicarboxylic acid diisononyl ester (diisononylcyclohexane-1,2dicarboxylate), dibutyl phthalate and solvent methoxypropyl acetate (2:2:3 wt.) were mixed. **Fig. 10** shows a microphotograph of the mixture of single-walled and double-walled carbon nanotubes used for producing the carbon nanotube concentrate. The microphotograph clearly shows single-walled and double-walled carbon nanotubes, as well as particles of the metal catalyst covered with a layer of graphite-like carbon. The ratio of intensities of G and D lines in the Raman spectrum for light wavelength 532 nm by the carbon nanotube concentrate is 34. The mixing step was performed using a high-speed rotor-stator type mixer (IKA25) at 15000 rpm for 5 min. Then the rotation speed was reduced to 2 m/sec (1000 rpm), and the mixture was degassed under vacuum for 5 min upon stirring. Total input energy was 0.045 kW·h, which amounted to 0.05 kW·h per 1 kg mixture. Then 114.9 g of cross-linker IMPRAFIX^{®} HS-C was added to the mixture, and the mixture was stirred at impeller rotation speed 1000 rpm for 1 min upon degassing. The obtained mixture was poured into a metal mold pre-heated to 160°C and cured in a drying oven at 160°C for 5 minutes.

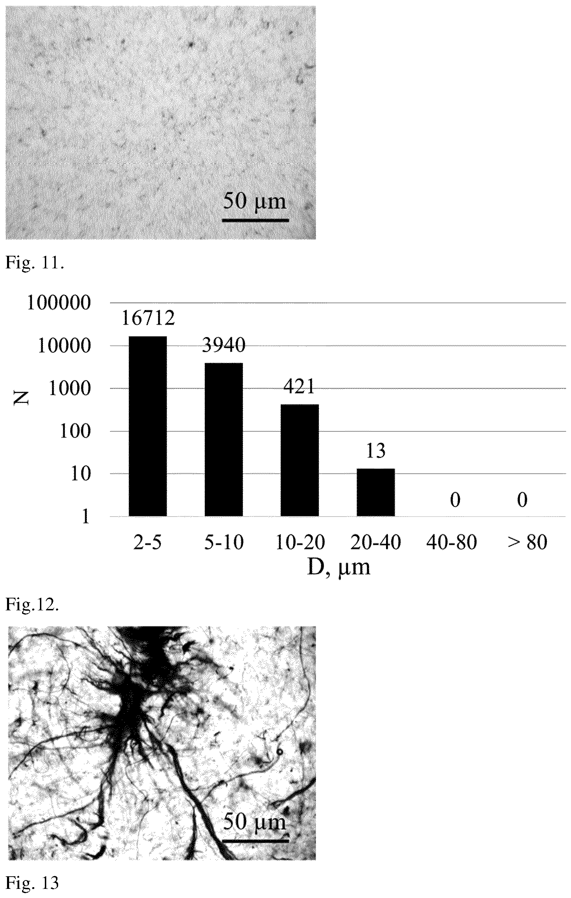

**Fig. 11** shows an example of microphotograph of thus obtained polyurethane composite material. **Fig. 12** shows a histogram of distribution of the number of agglomerates by their diameter, which was obtained from the analysis of 50 microphotographs. For the obtained foamed polyurethane composite material, more than 90 wt.% carbon nanotubes are in agglomerates with a size of less than 20 µm. The obtained composite polyurethane material has a volume resistivity of 1·10⁶ Ohm·cm, and it is therefore conductive (antistatic) at carbon nanotube content of 0.05 wt.%. The density of the material is 1000 kg/m³. The obtained composite polyurethane material had a tensile strength 25.3 MPa, while tensile strength of a material of similar composition without carbon nanotubes was 25.0 MPa. Thus, mechanical processing at the step of mixing the components of the polyurethane material with the carbon nanotube concentrate did not cause degradation of the components of the polyurethane material and deterioration of its physical and mechanical properties compared to the material free of carbon nanotubes.

### Example 14.

250 g of polyurethane antistatic composite material were produced by reacting an organic polyisocyanate (A) with a compound (B) comprising NCO-reactive groups; and mixing the carbon nanotube concentrate was performed simultaneously with mixing the components (A) and (B) using a twin-screw extruder at the energy input 0.32 kW·h per 1 kg mixture. A pre-dispersed mixture of 70 wt.% TUBALL^{™} single-walled carbon nanotubes and 30 wt.% diethylene glycol was used as the carbon nanotube concentrate. The ratio of intensities of G and D bands in the Raman spectrum for light wavelength 532 nm by the carbon nanotube concentrate is 55. The ratio of components (A):(B):(SWCNT concentrate) was 140:140:0.2; screw pitch 50 m; screw length (L) to its diameter (D) ratio L/D = 50; screw speed 500 rpm; processing temperature 30°C; the location of introducing polyol based on polyester Isolan 430/150 (B) was 1 to 3 D (50 to 150 mm) from the beginning of the screw; the location of introducing methyl diphenyl diisocyanate (MDI) (A) was 3 to 5 D (150 to 250 mm) from the beginning of the screw; the location of introducing the SWCNT concentrate comprising 70 wt.% TUBALL^{™} single-walled carbon nanotubes and 30 wt.% diethylene glycol was 5 to 10 D (250 to 500 mm) from the beginning of the screw.

For the obtained rigid foamed composite polyurethane material, more than 93 wt.% SWCNT are in agglomerates with diameter less than 40 µm. The obtained composite polyurethane material has a volume resistivity of 5·10⁶ Ohm·cm, and it is therefore conductive (antistatic) at the SWCNT content of 0.05 wt.%. The density of the obtained conductive rigid foamed composite polyurethane material was 154 kg/m³, the density of a material of a similar composition without SWCNT was 150 kg/m³. Thus, mechanical processing at the step of mixing the components of the polyurethane material with the CNT concentrate did not cause degradation of the components of the polyurethane material and deterioration of its physical and mechanical properties compared to the CNT-free material.

### Example 15.

1900 g of polyurethane antistatic composite material were produced by reacting an organic polyisocyanate (A) with a compound (B) comprising NCO-reactive groups, and mixing of carbon nanotube concentrate was performed simultaneously with mixing the components (A) and (B) using a kneader at the energy input 0.4 kW·h per 1 kg mixture. A pre-dispersed mixture of 40 wt.% TUBALL^{™} single-walled carbon nanotubes and 60 wt.% 1,2-cyclohexanedicarboxylic acid diisononyl ester (diisononylcyclohexane-1,2-dicarboxylate) was used as the carbon nanotube concentrate. The ratio of intensities of G and D bands in the Raman spectrum for light wavelength 532 nm by the carbon nanotube concentrate is 60. The content of the components was as follows: prepolymer PERMAQURE^{®} EX-HS-2764 (A)- 1606.1 g; cross-linker PERMAQURE^{®} XR-2703 (B)-290.1 g; SWCNT concentrate-3.8 g; chamber load factor-0.7 (2.1 I); rotor rotation speed-50 rpm; chamber temperature-30°C. The obtained mixture was poured into a metal mold preheated to 160°C and cured in a drying oven at 160°C for 5 minutes.

For the obtained composite polyurethane material, more than 90 wt.% SWCNT are in agglomerates with diameter less than 40 µm. The obtained composite polyurethane material has a volume resistivity of 1·10³ Ohm·cm, and it is therefore conductive (antistatic) at the SWCNT content of 0.08 wt.%. The density of the material is 900 kg/m³.

### Example 16 (Comparative).

1 kg of the polyurethane composite material was produced according to the method described in US 8945434, although the amount of TUBALL^{™} carbon nanotubes was chosen so that the finished product would contain 0.09 wt.% SWCNT. In a 2 liter metal container, 884.3 g of prepolymer based on polyester and toluene diisocyanate (TDI) SKU-PFL 74 (A), and 0.9 g of the carbon nanotubes were mixed. Mixing was performed using a disk dissolver with a toothed impeller at the input power density 2.5 kW per 1 liter of mixture for one hour. The energy input was 2.3 kW·h. Then 114.8 g of curing agent MOCA, which was pre-melted at 112°C, was added to the mixture, and the mixture was stirred at impeller rotation speed 2 m/sec (960 rpm) for 1 min upon degassing. The obtained mixture was poured into a metal mold pre-heated to 110°C and cu red in a drying oven at 110°C for 1 hour.

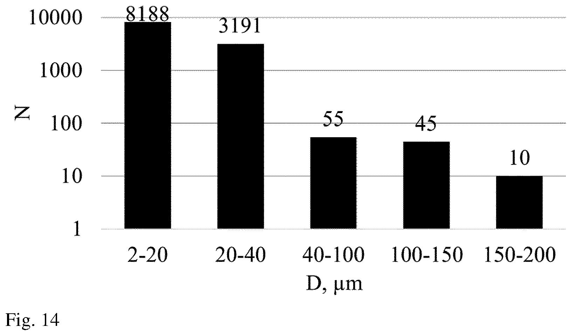

Microphotographs essentially show coil-like aggregates with the shape close to spherical (**Fig. 13**). **Fig. 14** shows a histogram of distribution of the number of agglomerates by their diameter, which was obtained from the analysis of 40 microphotographs. For the obtained composite polyurethane material, the mass fraction of the carbon nanotubes in particles with a size of less than 40 µm was about 40 wt.%, the fraction of particles with a size of 100 to 200 µm was about 55 wt.%. Thus obtained polyurethane material has a volume resistivity of 5·10¹¹ Ohm·cm. The obtained composite polyurethane material has a tensile strength 29.0 MPa, while a tensile strength of a material of a similar composition without SWCNT was 45.3 MPa. Thus, mechanical processing at the step of mixing CNT with the components of the polyurethane material led to the deterioration of the physical and mechanical properties compared to the CNT-free material due to degradation of the components of the polyurethane material. Furthermore, the produced material does not have the required conductivity.

### Example 17 (Comparative).

The polyurethane composite material was produced according to the method similarly to Example 7, but mixing was performed using an overhead stirrer with a 40 mm toothed disk impeller at rotation speed of 15 m/sec (7100 rpm) for 120 min. Then the rotation speed was reduced to 2 m/sec (960 rpm), and the mixture was degassed under vacuum for 5 min upon stirring. Total input energy was 2.1 kW·h, which amounted to 2.3 kW·h per 1 kg mixture.

Thus obtained polyurethane material has a volume resistivity of 1·10¹² Ohm·cm. The obtained composite polyurethane material has a tensile strength 23.9 MPa, while a tensile strength of a material of a similar composition without SWCNT was 45.3 MPa. Thus, mechanical processing at the step of mixing the CNT concentrate with the components of the polyurethane material caused deterioration of the physical and mechanical properties compared to the CNT-free material due to degradation of the components of the polyurethane material. Furthermore, the produced material does not have the required conductivity.

### Example 18 (Comparative).

The polyurethane composite material was prepared according to the method similarly to Example 1, although the amount of CNT was chosen so that the finished product would contain 1 wt.% SWCNT. In a 2 liter metal container, 888 g of prepolymer based on polyester and toluene diisocyanate (TDI) SKU-PFL 74, and 1 g of carbon nanotubes were mixed. Mixing was performed using a disk dissolver with a toothed impeller at input power density 0.44 kW per 1 liter of mixture for one hour. The energy input was 0.41 kW·h. Then 112 g of curing agent MOCA, which was pre-melted at 112°C, was added to the mixture, and the mixture was stirred at impeller rotation speed 2 m/sec (960 rpm) for 1 min upon degassing. The obtained mixture had too high viscosity (higher than 1 kPa·s or 10⁶ cP) and did not allow for any further processing of the material.

### Industrial Applicability

The present invention can be used in the production of articles and coatings made of polyurethane composite materials having the desired conductivity.

### Patent Literature

**.** Patent literature 1: Patent US 8945434 B2

## Claims

1. A method of producing a conductive polyurethane composite material by reacting organic polyisocyanates (A) with one or several compounds comprising NCOreactive groups (B), **characterized in that** the method comprises the step of mixing a carbon nanotube concentrate with compounds (B) or polyisocyanates (A), or with a mixture comprising organic polyisocyanates (A) and compounds (B), at energy input of less than 0.5 kW·h per 1 kg mixture, with the content of carbon nanotubes less than 0.1 wt.% of the total mass of (A) and (B).

2. The method of claim 1, **characterized in that** mixing the carbon nanotube concentrate with compounds (B) or polyisocyanates (A), or with a mixture comprising organic polyisocyanates (A) and compounds (B), further comprises introducing one or several auxiliary components of the polyurethane composite material selected from the group consisting of a catalyst, an inhibitor, a foaming agent, an antifoaming agent, a dye, a coloring pigment, a filler, a cross-linker, a plasticizer, a thickener, a thixotropic additive, a surface modifier, a flame retardant, a UV-protecting compound, an antioxidant, a stabilizer, an antimicrobial additive, an antifungal additive.

3. The method of claim 2, **characterized in that** the carbon nanotube concentrate is pre-mixed with one or several auxiliary components of the polyurethane composite material.

4. The method of claim 1, **characterized in that** the method further comprises one or several steps of introducing one or several auxiliary components of the polyurethane composite material selected from the group consisting of a catalyst, an inhibitor, a foaming agent, an antifoaming agent, a dye, a coloring pigment, a filler, a cross-linker, a plasticizer, a thickener, a thixotropic additive, a surface modifier, a flame retardant, a UV-protecting compound, an antioxidant, a stabilizer, an antimicrobial additive, an antifungal additive.

5. The method of claim 1, **characterized in that** the carbon nanotube concentrate comprises 1 to 80 wt.% carbon nanotubes.

6. The method of claim 1, **characterized in that** the carbon nanotube concentrate comprises 1 to 80 wt.% single-walled and/or double-walled carbon nanotubes.

7. The method of claim 1, **characterized in that** the ratio of intensities of G and D bands in the Raman spectrum for light wavelength 532 nm by the carbon nanotube concentrate is more than 10.

8. The method of claim 7, **characterized in that** the ratio of intensities of G and D bands in the Raman spectrum for light wavelength 532 nm by the carbon nanotube concentrate is more than 50.

9. The method of claim 1, **characterized in that** the carbon nanotube concentrate comprises 20 to 99 wt.% of one or several esters of aliphatic alcohols with phthalic acid, or sebacic acid, or adipic acid, or 1,2-cyclohexanedicarboxylic acid.

10. The method of claim 1, **characterized in that** the carbon nanotube concentrate comprises 20 to 99 wt.% of one or several alcohols with general formula CₙH₂ₙ₋ₓ(OH)ₓ, where n and x are integers greater than 1.

11. The method of claim 1, **characterized in that** the carbon nanotube concentrate is mixed with (A) or (B), or with a mixture comprising organic polyisocyanates (A) and compounds (B), by stirring with a mixer with a linear rotation speed of the impeller outer edge less than 15 m/sec.

12. The method of claim 1, **characterized in that** the carbon nanotube concentrate is mixed with (A) or (B), or with a mixture comprising organic polyisocyanates (A) and compounds (B), by stirring with a mixer selected from the group consisting of a planetary mixer, a rotor-stator type mixer, a twin screw mixer, a three-roll mill, a kneader.

13. A conductive polyurethane composite material, **characterized in that** it is produced according to the method of claim 1.

14. The composite material of claim 13, **characterized in that** more than 90 wt.% of carbon nanotubes are in agglomerates with a diameter of less than 40 µm.

15. The composite material of claim 14, **characterized in that** more than 90 wt.% of carbon nanotubes are in agglomerates with a diameter of less than 20 µm.

16. The composite material of claim 13, **characterized in that** the material is a foam with a density of 20 to 1000 kg/m³ and a volume resistivity of 10 to 10⁹ Ohm·cm.

17. The composite material of claim 13, **characterized in that** the material is a syntactic cellular plastic with a density of 500 to 2000 kg/m³ and a volume resistivity of 10 to 10⁹ Ohm·cm.

18. The composite material of claim 13, **characterized in that** the material is a solid material with a density of 800 to 2000 kg/m³ and a volume resistivity of 10 to 10⁹ Ohm·cm.
